Europäisches Patentamt

European Patent Office

Office européen des brevets

(19)

(11) EP 0 491 445 B1

(12) **EUROPÄISCHE PATENTSCHRIFT**

(45) Veröffentlichungstag und Bekanntmachung des Hinweises auf die Patenterteilung:
**10.07.1996 Patentblatt 1996/28**

(51) Int Cl.⁶: **G05D 3/20**

(21) Anmeldenummer: **91250299.4**

(22) Anmeldetag: **31.10.1991**

(54) **Verfahren zur adaptiven Regelung positionierbarer Antriebe**

Method for adaptive control of positionable drives

Procédé de contrôle adaptif pour les entraînements positionables

(84) Benannte Vertragsstaaten:
**BE CH DE FR GB LI NL SE**

(30) Priorität: **17.12.1990 DE 4040796**

(43) Veröffentlichungstag der Anmeldung:
**24.06.1992 Patentblatt 1992/26**

(73) Patentinhaber: **MANNESMANN Aktiengesellschaft D-40027 Düsseldorf (DE)**

(72) Erfinder:
• **Moosmann, Bernhard W-7232 Hardt (DE)**

• **Fischer, Jürgen W-7230 Schramberg S. (DE)**
• **Bauspiess, Wolfgang W-7730 VS-Villingen (DE)**

(74) Vertreter: **Presting, Hans-Joachim, Dipl.-Ing. et al Meissner & Meissner, Patentanwaltsbüro, Postfach 330130 14171 Berlin (DE)**

(56) Entgegenhaltungen:
**EP-A- 0 090 642       DE-A- 3 121 048
GB-A- 2 082 348       US-A- 3 996 590
US-A- 4 761 595**

**Beschreibung**

Die Erfindung betrifft ein Verfahren zur adaptiven Regelung positionierbarer Antriebe, gemäß Oberbegriff des Patentanspruches 1.

In geregelten positionierbaren Antrieben werden für die Ausführbarkeit verschiedener Positionieraufgaben oft an die Aufgabe angepaßte Sätze von Regelparametern benötigt. Dies gilt insbesondere für Antriebe nach dem servopneumatischen Antriebsprinzip. Die Schwierigkeit der Regelung servopneumatischer Antriebe liegt in dem nicht linearen Verhalten von Ventilen und Zylindern und in der Kompressibilität des Druckmittels begründet. In der Praxis ergibt sich hieraus eine nicht lineare lastabhängige Regelstrecke. Zur Anpassung der aus den entsprechenden Differentialgleichungen vorbestimmbaren Bewegungsgrößen und die für die Steuerung maßgebende Ermittlung der entsprechenden Stellgrößen ist es bekannt, sogenannte selbstlernende Regelstrecken aufzubauen. Dabei wird durch Vergleich von Soll- und Istwert die Abweichung nicht nur ausgeregelt, sondern die der entsprechenden Fahrbewegung zuzuordnenden Regelparameter werden in einem selbstlernenden Prozeß in Richtung auf kürzere Fahrzeiten optimiert und abgespeichert. Das heißt, die Regelparameter sind beim erstmaligen Durchlauf vorbestimmt und beim wiederholten Durchlauf durch praktische Optimierung am Zielpunkt als optimierte Regelparameter ermittelt und für den nächsten Durchlauf abgespeichert. Solche Systeme werden im allgemeinen als adaptive Regelungen bezeichnet. Ein solches Regelkonzept ist aus dem Aufsatz von Professor Rusterholz (7. Aachener Fluidtechnisches Kolloquium März 1986) bekannt. In diesem bekannten Verfahren werden die Regelparameter an die aktuellen Streckenparameter angepaßt und als gesteuerte Adaption bezeichnet. Hierbei werden dann abhängig von den möglichen Kolbenpositionen die entsprechenden Regelparameter aus einem Festwertspeicher eines Mikrocomputers gelesen und in den Regelvorgang eingespeist. In servopneumatischen Antrieben hat die Lage der Start- und Zielposition entscheidenden Einfluß auf die optimale Größe der adaptiven Regelparameter, da je nach Position des beweglichen Antriebteils die von den Ventilen zu kontrollierenden Druckluftvolumina im Zylinderrohr stark variieren können. Diese Positionsabhängigkeit wird auch in diesem bekannten Verfahren berücksichtigt, indem zu jeder Position des Antriebteils des servopneumatischen Antriebes ein Satz adaptiver Regelparameter aus einem entsprechenden Festwertspeicher bereitgestellt wird und nach Ende der Aufgabe ggf. aufgrund beobachteter Regelzielabweichungen korrigiert und für die nächste gleichartige Aufgabe bereitgestellt wird. Zur Adressierung eines bestimmten Satzes von Regelparametern werden in bekannten Regelverfahren als Kennzahl verschiedene Größen benutzt. Bekannt sind die Zuordnung des Parametersatzes zur gespeicherten Zielposition, zum Fahrweg oder zur Schrittnummer des Maschinenzyklus. Nachteilig ist bei diesem bekannten Verfahren, daß eine Berücksichtigung beispielsweise alleine der Kolbenendposition nicht ausreicht, um optimale Kolbenbewegungen zu erreichen. Eine besondere Berücksichtigung unzyklischer Positionierabfolgen findet bei dem dargestellten bekannten Verfahren auch keine besondere Aufmerksamkeit. Dieses und andere bekannte Verfahren werden dann problematisch, wenn die Zielpositionen aus unterschiedlichen Entfernungen angefahren werden, die Abstände der Zielpositionen vom Anschlag stark variieren oder wenn die der Positionierungen nicht zyklisch erfolgen oder die Anzahl anzufahrender Positionen nicht bestimmbar ist, z. B. bei Positionsvorgabe durch einen Leitrechner oder aufgrund von Anpassung der Positionieraufgaben an Daten aus einer Bildauswertung. Zusammenfassend läßt sich dazu sagen, daß bekannte Regelverfahren entweder ausschließlich positionsabhängig, hub- bzw. streckenabhängig oder satz- bzw. zyklusabhängig sind. Hierbei berücksichtigt die positionsabhängige Regelung keine Wegstrecken, die streckenabhängige Regelung keine Randposition beispielsweise im Endanschlagbereich und die zyklusabhängige Regelung keine unzyklischen Positionieraufgaben. In diesen Fällen kann bei unkritischer Auswahl eines Parametersatzes durch Überschwingen in der Zielposition ein gefährlicher Betriebszustand auftreten. Zur Vermeidung dieser Zustände wird dann oft eine hohe Reglerdämpfung programmiert, die aber, falls nicht optimal adaptiert, zu Taktzeitverlusten führt.

Aufgabe der Erfindung ist es daher, ein Verfahren der gattungsgemäßen Art zu schaffen, daß bei Reduzierung der Taktzeiten ein Überschwingen in der Zielposition selbst bei unzyklischer Positionierabfolge vermieden werden kann.

Die gestellte Aufgabe wird erfindungsgemäß durch die Merkmale des Anspruches 1 gelöst. Weitere vorteilhafte Ausgestaltungen der Erfindung sind in den Unteransprüchen dargestellt.

Der erfindungsgemäße Vorschlag, daß bei einem Verfahren zur adaptiven Regelung positionierbarer Antriebe erfindungsgemäß eine für einen Betriebsablauf maßgebende Fahrstrecke zwischen ihren Anschlagpunkten ermittelt und in errechnete durchnumerierte Strecken- oder Winkelzonen eingeteilt und in einem Datenspeicher abgelegt werden, hat den Vorteil, daß zu jedem Betriebsbeginn des positionierbaren Antriebes eine optimale Anpassung der dimensionalen Gegebenheiten eines jeweils individuell geplanten Betriebsablaufes an die physikalischen Regelparameter, wie z.B. Fahrgeschwindigkeit, Fahrbeschleunigung, Druckluftmengen usw., vorgenommen werden kann. Mit Hilfe der so ermittelten Strecken oder Winkelzonen werden die die Fahrbewegungen beschreibenden Größen ermittelt und jeweils in einem durchnumerierten Zonensystem eingeteilt und in den Datenspeicher abgelegt. Dies hat den Vorteil, daß der Zugriff zwischen Strecken- oder Winkelzonen und den optimalen Regelparametern bzw.

den letztendlich ausgegebenen Steuersignalen in einfacher Form gewährleistet ist. Die Datenadresse für die Regelparameter des Regelparameterfeldes aus der Nummer einer Zone eines ersten Zonensystems und der Nummer einer Zone mindestens eines weiteren Zonensystems zu errechnen, gestattet eine optimale Anpassung an die jeweils physikalisch gegebenen Verhältnisse. Die Verbesserung dieses Verfahrens liegt darin begründet, daß zur Auswahl des passenden Parametersatzes nicht nur ein einzelnes Kriterium, wie z. B. Zielposition oder Satznummer des Maschinenzyklusses benutzt wird, sondern aus der Positionieraufgabe zwei oder mehr voneinander unabhängige Kennzahlen abgeleitet werden, die miteinander zu einem Index verknüpft werden und somit den Zugriff in das Feld des Regelparameterspeichers geben. In vorteilhafter Ausgestaltung sind als erstes Zonensystem die möglichen Startpositionen und als zweites Zonensystem die möglichen Zielpositionen des Antriebes zur Erreichung der Datenadressen im Regelparameterfeld benutzt. Dabei ist es nicht sinnvoll, jeder möglichen Kombination von Start- und Zielpositionen einen eigenen Parametersatz zuzuordnen, sondern es ist günstiger, ähnliche Positionieraufgaben zusammenzufassen, um eine schnellere Annäherung der gleitenden Integration der adaptiven Regelparameter an einen stabilen Mittelwert zu erreichen. Eine weitere vorteilhafte Ausgestaltung ergibt sich, wenn als erstes Zonensystem die möglichen Start- oder Zielpositionen und als zweites Zonensystem die möglichen Fahrstrecken oder Fahrwinkel des Antriebes zur Errechnung der Datenadresse des Regelparameterfeldes benutzt werden. Für den Betrieb mit mehr als zwei Zonensystemen, aus denen die Datenadresse errechnet wird, ist es vorteilhaft, daß die in den Positionieraufgaben aufgegebenen Fahrgeschwindigkeiten ein weiteres Zonensystem bilden, dessen Nummer zur Errechnung der Datenadresse im Regelparameterfeld zusätzlich herangezogen wird. Eine weitere Möglichkeit besteht auch darin, als weiteres Zonensystem die Massenlast zu berücksichtigen, wobei die Nummer der entsprechenden Massenlastzone aus der Startbeschleunigung ermittelt wird und die entsprechende Nummer der Zone zur Ermittlung der Datenadresse im Regelparameterfeld mitverwendet wird. Die Berücksichtigung der Nutzlast geht aus der Berücksichtigung der Massenlast hervor und hat den Vorteil einer an jede mögliche Betriebssituation angepaßten Regelung. Diese Möglichkeiten gestatten somit eine optimale Anpassung aller Betriebsparameter, d. h. nicht nur der Start- und Zielpositionen, sondern der Berücksichtigung aller für den Betriebsablauf relevanten physikalischen Parameter, zur optimalen und taktzeitreduzierenden Betriebsweise des positionierbaren Antriebes. Der Zugriff zu den Start- und Zielpositionen und weiteren gegebenen physikalischen Parametern in Kombination mit der Maßnahme, diese dann auch in entsprechende Zonen einzuteilen und aus den Indizes dieser Zonen die Datenadresse der optimalen Reglerparameter zu finden, gestattet es selbst bei unzyklischen Positionieraufgaben eine minimale Fahr- bzw. Taktzeit zu erreichen und gleichzeitig zu verhindern, daß der positionierbare Antrieb in der Zielposition überschwingt.

Die Erfindung ist in der Zeichnung dargestellt und im nachfolgenden näher erläutert.

Es zeigen:

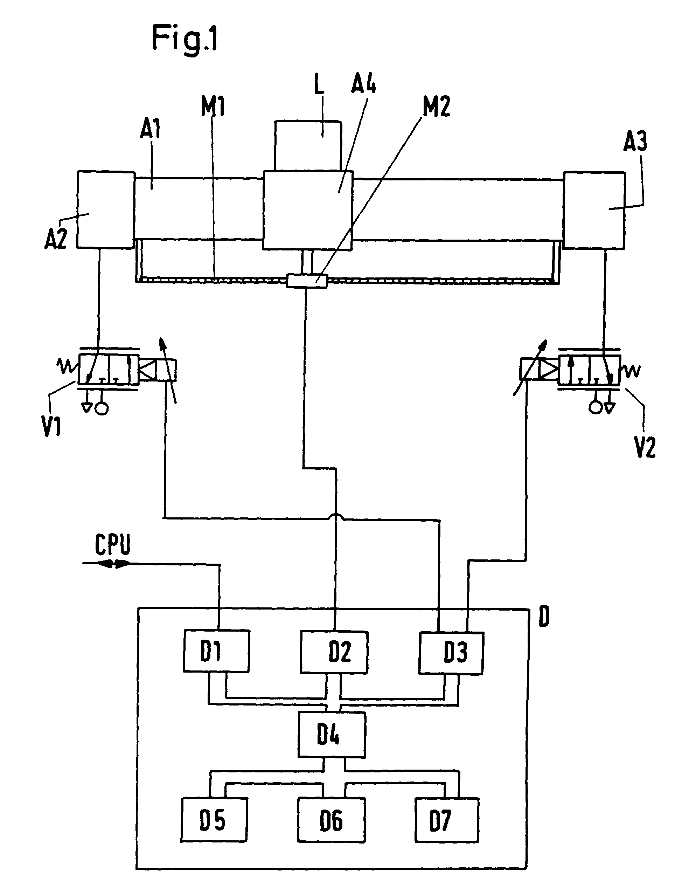

Figur 1    Gesamtübersicht Linearantrieb mit Ansteuerung

Figur 2    Zugriffschema zum Regelparameterfeld

Figur 3    Detail zu Figur 2.Figur 1 zeigt einen servopneumatischen

Linearantrieb A, bestehend aus Zylinderrohr A1, Zylinderköpfen A2, A3 und Schlitten A4. Am Zylinderrohr A1 ist ein Maßstabsystem M1 für den Abgriff der Schlittenposition angeordnet. Der mit dem Schlitten A4 verbundene Meßkopf M2 greift dabei in dieses Meßstabsystem ein und gibt die Position des Schlittens meßbar wieder. Aus diesem Positionsabgriff können alle für die Bewegung relevanten Parameter ermittelt und abgeleitet werden. Aus den ermittelten Positionswerten können abhängig von der Zeit somit auch Beschleunigung, Fahrgeschwindigkeit, Start- und Zielposition sowie Massenlast ermittelt werden. Die Massenlast wird aus der ermittelten Startbeschleunigung abgeleitet und berücksichtigt in Summe sowohl die zu bewegende Nutzlast als auch die Masse des Kolbens und der damit verbundenen Mittel wie zugband etc., gegebenenfalls auch die Reibung. Die Zylinderköpfe A2, A3 sind jeweils mit einem Servoventil V1, V2 verbunden, wobei die Servoventile zweckmässigerweise in den Zylinderköpfen integriert angeordnet sind, was dazu führt, daß zum einen keine Verluste über zusätzliche Leitungen gegeben sind und zum anderen das Servoventil mit einer entsprechend kurzen Ansprechzeit die Zylinderräume im Zylinderrohr beaufschlagt. Die Servoventile V1, V2 sowie der Abgriff des Meßsystems am Schlitten werden über einen Digitalregler D angesteuert bzw. abgegriffen. Der elektrische Steueranschluß des Ventiles V1 ist mit der Stellsignalsausgabe-Schnittstelle D3 des Digitalreglers D verbunden. Der Steueranschluß des Servoventils V2 ist ebenfalls mit dieser Stellsignalausgabe-Schnittstelle D3 verbunden. Der Abgriff des Meßsystems am Schlitten ist elektrisch mit der Istwert-Eingabe-Schnittstelle D2 verbunden. Die Istwert-Eingabe-Schnittstelle D2 hat ausgangsseitig eine Verbindung zur Stellsignalausgabe-Schnittstelle D3 und eine Verbindung zur Sollwert-Eingabe- und Kommando-Schnittstelle D1. Von der Sollwert-Eingabe- und Kommando-Schnittstelle D1 und der Stellsignalausgabe-Schnittstelle D3 führt eine Datenleitung zu einem Mikroprozessor D4, der ausgangsseitig sowohl mit dem Sollwertspeicher D5 als auch mit dem Speicher für adaptive Regelparameter D7 verbunden ist. Der Steuerprogrammspeicher D6 stellt seinerseits die Verbindung zwischen Sollwert-Speicher D5 und Speicher für die adaptiven Regelparameter D7 her. Die Sollwert-Eingabe- und Kommando-Schnittstelle D1 hat dabei eine direkte Verbindung zu dem Rechner bzw. dem Leitsystem, indem die Ermittlung der physikalischen Größen und die Errechnung der Datenadressen sowie die Anpassung der Regelparameter an die physikalischen Gegebenheiten errechnet werden. Hierbei wird das Ergebnis über die bestehende Leitung wieder zurück zur Sollwert-Eingabe- und Kommando-Schnittstelle D1 übertragen, die Ihrerseits dann die Regelung über den Mikroprozessor D4 und dem Speicher für adaptive Regelparameter D7 ausführt, wobei dann ausgangsseitig an der Stellsignalausgabeschnittstelle D3 die entsprechenden Steuersignale für die Ventile V1 und V2 ausgegeben werden. Im Mikroprozessor D4 sind damit zuvor alle physikalischen Größen berücksichtigt und in letztendlich druckluftmengenbestimmende Steuersignale für die Servoventile errechnet und aufbereitet. Die Stellsignalausgabeschnittstelle D3 gibt dann nur noch die entsprechenden Steuersignale an die Servoventile V1 und V2 weiter. Die mit dem Schlitten verbundene Nutzlast L beeinflußt den gesamten Bewegungsablauf dabei mit, da die veränderte Beschleunigung gegenüber dem unbelasteten Fall ebenfalls vom Meßsystem registriert und an die Steuerung entsprechend weitergegeben wird.

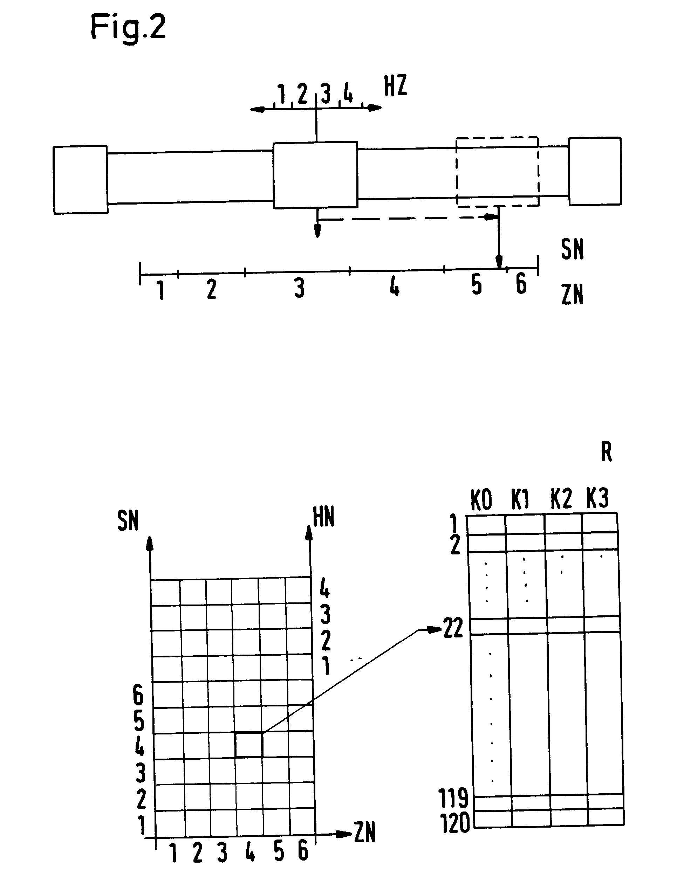

Figur 2 zeigt das Schema, nachdem beispielsweise Start und Zielposition sowie der Hub des Schlittens die entsprechenden Zonensysteme bilden. Die Zonen werden dadurch ermittelt, daß bei einer am Beginn des Betriebsablaufes eingeleitete Testfahrt die für den Betriebsablauf maßgebende Fahrstrecke zwischen den Anschlagspunkten abgefahren wird, die Anschlagpunkte ermittelt, abgespeichert, die Fahrstrecke in Zonen eingeteilt und in einem Rechner abgelegt werden. Hierbei folgt dann dem in Figur 2 dargestellten Beispiel die Einteilung in Start-, Ziel-und Hubzonen. Es kommt dabei nicht darauf an, daß diese Zonen äquidistant verteilt sind, sondern es soll vielmehr die Möglichkeit benutzt werden mit Hilfe des Rechners, beispielsweise eine logarithmische Aufteilung der Zonen vorzunehmen. Dies hat insbesondere dann einen Vorteil, wenn die gesamte Hublänge sehr groß ist und somit die mit Druckluft zu beaufschlagenden Druckvolumina sehr stark variieren. Diese Anpassung ist jeweils einmal nach erfolgter Installation, d. h. Anpassung des Antriebes an die Arbeitsaufgabe erforderlich.

Dabei bedeutet:

NS: Anzahl der Startzonen
SN: Index der Startzone
NZ: Anzahl der Zielzonen
ZN: Index der Zielzone
NH: Anzahl der Hubzonen
HN: Index der Hubzone
NG: Anzahl der Geschwindigkeitszonen
GN: Index der Geschwindigkeitszonen
NL: Anzahl der Lastzonen
LN: Index dar Lastzone.

NP: Anzahl der Parametersätze

Hierbei errechnet sich diese Größe wie folgt:

$$NP = NZ \times (NS + NH) \times NL.$$

**PN: Nummer des gewählten Parametersatzes.**

Dies errechnet sich für **große Hübe** wie folgt:

$$PN = ZN + (SN-1) \times NZ + (LN-1) \times NZ \times NS$$

und für **kleine Hübe**:

$$PN = ZN + (HN-s) \times NZ + (LN-1) \times NZ \times NH + NZ \times NS$$

$$\times NL$$

Für einen Beispiels-Fall ergibt sich aus NH=4, NZ=6, NS=6, NG=2 dann für die Anzahl der Parametersätze NP = 120. Somit müssen damit in dem Regelparameterfeld R 120 Parametersätze zur Verfügung stehen, dessen Parameter mit K0, K1, K2 usw. bezeichnet sind. Die Vorteile einer solchen Regelparameterauffindung werden anhand eines folgenden Beispieles deutlich. Befindet sich der Schlitten im Bereich eines der Endanschläge des Linearantriebes so benötigt er zum Verfahren aus dieser Startposition um beispielsweise eine Strecke von 30 % des maximal möglichen Fahrweges eine bestimmte zeitlich geregelte Druckluftmenge. Hierzu ist ein anderer Parametersatz notwendig, als beispielsweise den Schlitten von etwa der Mitte des Linearantriebes an um die gleiche Fahrstrecke von etwa 30 % des maximal möglichen Fahrweges zu verfahren. Dies liegt daran, daß im ersten Fall das mit Druckluft zu beaufschlagende Volumen zum Verfahren des Schlittens ein anderes ist, als im zweiten Fall, bei dem der Schlitten etwa in der Mitte des Linearantriebes gestartet wird. Dies auch, obwohl der letztendlich gefahrene Weg, d. h. der Hub im Betrag gleich ist.

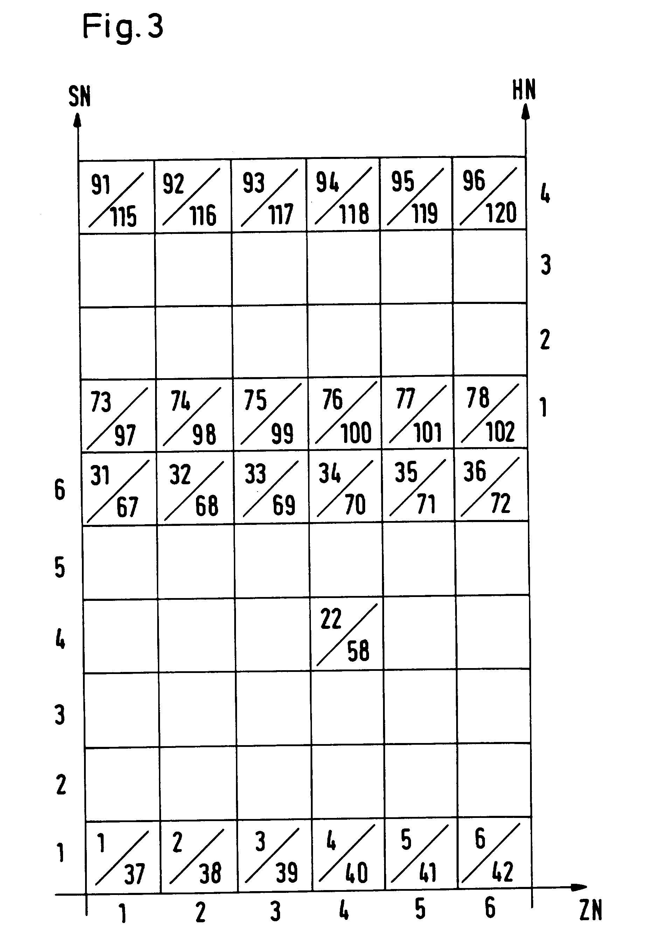

Figur 3 zeigt das Schema aus Figur 2 nach dem die Datenadressen bestimmt werden im Detail. Für das vorliegende Ausführungsbeispiel ist angenommen, daß SN=6, ZN=6 und HN=4 ist, d.h. in Worten, daß im vorliegenden Ausführungsbeispiel sowohl die Start- als auch die Zielpositionen in jeweils sechs Zonen eingeteilt sind. Die Hubpositionen bzw. die Hublängen sind in vier Zonen eingeteilt. Daraus ergibt sich das bereits in Figur 2 dargestellte und in Figur 3 detaillierte Schema. Hierbei ist jeder Platz, d. h. jedes Quadrat innerhalb des Feldes mit zwei Zahlen belegt, die es in Kombination ermöglichen, die drei Zonensysteme miteinander zu korrelieren. Dieser Sinn der zwei Zahlen pro Quadrat wird an einem Beispiels deutlich. Befindet sich der Startpunkt in der Startzone 4 und der Zielpunkt in der Zielzone 4, so ergibt sich in dem Feld das Quadrat mit der Zahlenkombination 22/58. Wird nun als zusätzliche Information eingegeben, daß es sich um einen kurzen Hub handelt, so ist die Zahl 22 maßgebend, und für den Fall, daß es sich um einen großen Hub handelt, ist die Zahl 58 maßgebend. Das heißt, in diesem Beispiel wird bei einem kurzen Hub der Parametersatz 22 angesteuert und bei einem großen Hub der Parametersatz 58. Wie bereits oben dargestellt, handelt es sich bei der vorgegebenen Ausgestaltungsmöglichkeit um insgesamt 120 Parametersätze. Diese Parametersätze sind es dann auch, die die Ziffern der aus zwei Zahlen bestehenden Kombination pro Quadrat im Feld ergeben.

Ein weiteres Beispiel stellt eine sogenannte hubabhängige Regelung dar. Ist die angestrebte Zielposition in Zielzone 5 und bewegt sich der Hub im Bereich der Hubzone 1, so ergibt sich das Quadrat im Zonenfeld mit den Ziffern 77/110; die dann in entsprechender Weise wieder die Datenadresse im Regelparameterfeld bestimmen.

Hierbei verbergen sich hinter diesen dargestellten Zahlen Regelparametersätze, die die bereits ausführlich beschriebenen physikalischen Parameter bzw. Größen des Systems enthalten.

An diesem Beispiel wird klar, daß durch die Zonen-Einteilung mehrerer Größen und somit die Schaffung von mehreren Zonen aus dessen Indizes dann die Datenadresse für die Regelparameter errechnet werden, eine sehr viel sensiblere und die genannten Vorteile herbeiführende Regelung für positionierbare Antriebe gegeben ist.

## Patentansprüche

1. Verfahren zur adaptiven Regelung positionierbarer Antriebe, bei dem aus der Fahrbewegung optimierte Parameter ermittelt und bei Abweichung von in Datenspeichern abgelegten Parametern korrigiert abgespeichert werden,
dadurch gekennzeichnet,

daß jeweils eine für einen spezifischen Betriebsablauf maßgebende Fahrstrecke zwischen ihren Anschlagpunkten durch eine Testfahrt ermittelt und in errechnete durchnumerierte Strecken- oder Winkelzonen eingeteilt und in einen Datenspeicher abgelegt werden,
daß mit Hilfe der so ermittelten Strecken- oder Winkelzonen die Fahrbewegungen beschreibende Größen ermittelt und jeweils in ein durchnumeriertes Zonensystem eingeteilt und in einen Datenspeicher abgelegt werden,
daß aus der Nummer einer Zone eines ersten Zonensystems und der Nummer einer Zone mindestens eines weiteren Zonensystems eine Datenadresse errechnet wird,
und daß ein in einen Datenspeicher abgelegtes Regelparameterfeld für die Fahrbewegungen mit der errechneten Datenadresse angesteuert wird und die angesteuerten Parameter zur Stellgrößenermittlung in die Regelung eingespeist werden.

2. Verfahren zur adaptiven Regelung positionierbarer Antriebe nach Anspruch 1,
dadurch gekennzeichnet,
daß als erstes Zonensystem die möglichen Startpositionen und als zweites Zonensystem die möglichen Zielpositionen des Antriebes zur Errechnung der Datenadresse im Regelparameterfeld benutzt werden.

3. Verfahren zur adaptiven Regelung positionierbarer Antriebe nach Anspruch 1,
dadurch gekennzeichnet,
daß als erstes Zonensystem die möglichen Start- oder Zielpositionen und als zweites Zonensystem die möglichen Fahrstrecken oder Fahrwinkel des Antriebes zur Errechnung der Datenadresse des Regelparameteresfeldes benutzt werden.

4. Verfahren zur adaptiven Regelung positionierbarer Antriebe nach einem oder mehreren der vorhergehenden Ansprüche,
dadurch gekennzeichnet,
daß die in den Positionieraufgaben vorgegebenen Fahrgeschwindigkeiten ein weiteres Zonensystem bilden, dessen Nummer zur Errechnung der Datenadresse im Regelparameterfeld mitbenutzt wird.

5. Verfahren zur adaptiven Regelung nach einem oder mehreren der vorhergehenden Ansprüche,
dadurch gekennzeichnet,
daß in einem weiteren Zonensystem die Massenlast berücksichtigt wird und die Nummer der entsprechenden Massenlastzone aus der Startbeschleunigung ermittelt und die entsprechende Nummer der Zone zur Errechnung der Datenadresse des Regelparameterfeldes mitbenutzt wird.

## Claims

1. Process for adaptive adjustment of positions of a drive in which optimized parameters are recorded from movement and in which parameters stored in a memory are corrected and re-stored when there is divergence from said stored parameters, characterized in that

a respective critical distance of movement, between its points of contact, for a specific process is recorded by means of test-running and is divided up into calculated, numbered distance- or angle-zones which are recorded in a memory, and are in each case divided up into a numbered zone-system and recorded in a memory,
an address is calculated from a number of a zone of a first zone-system and from a number of a zone of at least one further zone-system, and in that a control-parameter field for movements, stored in a memory, is controlled with an address and controlled parameters are fed into control means for recording of extents of adjustment.

2. Process for adaptive adjustment of positions of a drive in accordance with claim 1,
characterized in that
possible initial positions of a drive are used as a first zone-system and possible target positions of a drive are used as a second zone-system to calculate an address in a control-parameter field.

3. Process for adaptive adjustment of positions of a drive, in accordance with claim 1,
characterized in that
possible initial or target positions are used as a fist zone-system and possible distances of movement or angles of movement of a drive are used as a second zone-system to calculate addresses of a control-parameter field.

4. Process for adaptive adjustment of positions of a drive in accordance with one or several of preceding claims,
characterized in that
speeds of movement, set in details of position, form a further zone system, a number concerned of a said zone-system also being used to calculate an address in a control-parameter field.

5. Process for adaptive adjustment in accordance with any one or several of preceding claims,
characterized in that
mass load is taken into account in a further zone-system and a corresponding number of a mass-load zone is recorded from initial acceleration and a corresponding number of a zone concerned is used to calculate an address of a control-parameter field.

**Revendications**

1. Procédé pour la commande adaptative d'entraînements pouvant être positionnés, pour lequel des paramètres optimisés du mouvement de roulement sont détectés et sont enregistrés de façon corrigée, lorsqu'ils s'écartent de paramètres stockés dans des mémoires de données,
caractérisé,

   - en ce qu'à chaque fois, une voie de roulement caractéristique pour un mode de fonctionnement spécifique, est détectée entre ses points de butée par un roulement de test, est associée à des zones de trajet ou d'angle calculées et numérotées, et est stockée dans une mémoire de données,
   - en ce qu'à l'aide des zones de trajet ou d'angle ainsi déterminées, les grandeurs décrivant les mouvements de roulement sont détectées, et sont associées à chaque fois à un système à zones numéroté, et sont stockées dans une mémoire de données,
   - en ce que l'on calcule une adresse de données, à partir du numéro d'une zone d'un premier système à zones et du numéro d'une zone d'au moins un autre système à zones,
   - et en ce qu'un champ de paramètres de commande, stocké dans une mémoire de données, pour les mouvements de roulement, est commandé par l'adresse de données calculée, et les paramètres commandés sont introduits dans la commande pour la détermination des grandeurs de réglage.

2. Procédé pour la commande adaptative d'entraînements pouvant être positionnés selon la revendication 1,
caractérisé en ce que l'on utilise, pour le calcul de l'adresse de données dans le champ de paramètres de commande, comme premier système à zones, les positions de départ possibles, et comme second système à zones, les positions d'arrivée possibles, de l'entraînement.

3. Procédé pour la commande adaptative d'entraînements pouvant être positionnés selon la revendication 1,
caractérisé en ce que l'on utilise, pour le calcul de l'adresse de données du champ de paramètres de commande, comme premier système à zones, les positions de départ ou d'arrivée possibles, et comme second système à zones, les trajets de roulement ou les angles de roulement possibles, de l'entraînement.

4. Procédé pour la commande adaptative d'entraînements pouvant être positionnés selon l'une ou plusieurs des revendications précédentes,
caractérisé en ce que les vitesses de roulement prédéfinies dans les tâches de positionnement, forment un autre système à zones, dont le numéro est également utilisé pour le calcul de l'adresse de données dans le champ de paramètres de commande.

5. Procédé pour la commande adaptative selon l'une ou plusieurs des revendications précédentes,
caractérisé en ce que l'on tient compte, dans un autre système à zones, de la charge massique, et le numéro de la zone à charge massique correspondante est déterminé à partir de l'accélération de départ, et le numéro correspondant de la zone est également utilisé pour le calcul de l'adresse de données du champ de paramètres de commande.

# Fig.1

# Fig.2

# Fig.3